# DEMANDE DE BREVET EUROPEEN

(11) **EP 1 122 012 A1**
(43) Date de publication de la demande: **08.08.2001**
(21) Numéro de dépôt: 01400060.8
(22) Date de dépôt: 11.01.2001
(51) Int. Cl.: B23B 31/40

(54) **Mandrin expansible de haute précision avec changement rapide de douille**

(30) Priorité: 28.01.2000 FR 0001150
(71) Demandeur: SANDVIK TOBLER S.A., F-95380 Louvres (FR)
(72) Inventeur: Barbieux, Jacques, 95380 Louvres (FR)
(74) Mandataire: Lhuillier, René

(57) **Abrégé**

L'invention propose un mandrin comprenant un arbre (1) présentant une extrémité antérieure conique (10), une douille expansible (5) constituée d'une bague munie de fentes longitudinales destinée à coulisser sur ladite extrémité antérieure conique (10), la paroi interne de ladite douille (5) ayant elle aussi la forme d'un cône dont l'angle au sommet est égal à celui de l'extrémité antérieure conique (10), et un tirant (2) destiné à être relié à une tige que l'on peut faire coulisser le long de l'axe de la broche machine pour commander le serrage ou le desserrage d'une pièce à usiner. Selon l'invention, la douille (5) est reliée audit tirant (2) par l'entremise d'une bague de commande (3) solidaire du tirant (2), et le mandrin comprend un moyen de fixation rapide amovible permettant d'assujettir la douille (5) à ladite bague de commande (3).

## Description

La présente invention concerne un mandrin expansible, c'est-à-dire un mandrin destiné à serrer une pièce à usiner (tournage, rectification) en pressant une partie expansible du mandrin sur les parois d'un alésage axial aménagé dans ladite pièce.

On connaît un premier type de mandrin expansible, dont le corps ("arbre du mandrin") comporte une partie antérieure ayant, avant le serrage, la forme d'un cylindre creux muni de plusieurs fentes longitudinales. L'expansion de cette partie fendue est obtenue en faisant coulisser le long de l'axe de cette dernière une vis à tête conique, de sorte que la partie fendue prend au cours du serrage une forme conique d'angle au sommet de plus en plus important. Ladite vis à tête conique est située à l'extrémité d'un tirant longitudinal. Quand on monte ce mandrin sur la broche machine, on visse sur le tirant une tige que l'on peut faire coulisser le long de l'axe de la broche machine pour commander le serrage ou le desserrage de la pièce à usiner. Un écrou de fixation permet d'assujettir l'arbre du mandrin sur la face antérieure de la broche machine.

Bien que ce type de mandrin soit relativement simple à fabriquer, et peu coûteux, il présente plusieurs inconvénients. D'abord, l'expansion conique de la partie fendue est irrégulière, ce qui fait que le serrage manque de précision. Ensuite, la partie fendue manque de rigidité et risque de se déformer ou même de se casser quand on actionne le mécanisme de serrage en présence, ou pire, en l'absence, d'une pièce à usiner ; on ne peut alors remplacer la partie défectueuse qu'en remplaçant le mandrin tout entier. De même, le diamètre de serrage caractérisant chaque mandrin est unique, à un usinage de finition près, ce qui fait que l'utilisateur est contraint de changer de mandrin quand il doit usiner une pièce dont l'alésage présente un diamètre suffisamment différent de la pièce précédente. Ces inconvénients causent évidemment une perte de temps et des surcoûts importants.

Un certain nombre de ces inconvénients sont absents d'un second type de mandrin classique (d'ailleurs fabriqué par la Demanderesse de la présente invention). Dans ce type de mandrin, l'arbre présente une partie antérieure de forme conique. A l'inverse donc du mandrin décrit précédemment, c'est ici la partie expansible qui va coulisser axialement pour effectuer le serrage ou le desserrage. Cette partie expansible est constituée d'une bague munie de fentes longitudinales ("la douille"), la paroi interne de cette douille ayant la forme d'un cône dont l'angle au sommet est égal à celui du cône sur lequel la douille coulisse ; la surface externe de la douille demeure donc rigoureusement cylindrique au cours de son expansion, assurant ainsi un serrage parfaitement précis et uniforme. De plus, il n'existe aucun risque de rupture ou de déformation inélastique de la douille quand on actionne le tirant de commande, en présence ou en l'absence d'une pièce à usiner. Enfin, pour passer d'une pièce à une autre de diamètre d'alésage différent, il suffit de changer la douille, et non le mandrin tout entier.

Dans ce mandrin connu, la douille se prolonge vers l'arrière par un manchon d'accouplement qui est attaché au tirant de commande à l'aide d'une goupille maintenue en place par un jonc encerclant ledit manchon. Le démontage de la douille avec son manchon d'accouplement, et son remplacement par une autre douille analogue demandent du temps. Il s'est dès lors avéré souhaitable, pour pouvoir mettre à profit au mieux l'amovibilité de la partie expansible offerte par ce type de mandrin, d'inventer un système de fixation de la douille sur le mandrin qui permette un changement de douille rapide et aisé.

La présente invention a donc pour but de raccourcir considérablement le temps requis pour changer de douille, tout en préservant les avantages de ce second type de mandrin classique. Pour ce faire, elle propose un mandrin expansible comprenant un arbre présentant une extrémité antérieure conique, une douille expansible constituée d'une bague munie de fentes longitudinales destinée à coulisser sur ladite extrémité antérieure conique, la paroi interne de la douille ayant elle aussi la forme d'un cône dont l'angle au sommet est égal à celui de ladite extrémité antérieure conique, et un tirant destiné à être relié à une tige que l'on peut faire coulisser le long de l'axe de la broche machine pour commander le serrage ou le desserrage d'une pièce à usiner. Selon l'invention, ladite douille est reliée audit tirant par l'entremise d'une bague de commande solidaire du tirant, et le mandrin comprend un moyen de fixation rapide amovible permettant d'assujettir la douille à ladite bague de commande.

Selon des caractéristiques particulières, la douille comporte des saillies radiales, et ledit moyen de fixation rapide amovible est constitué par un écrou capable de se fixer sur ladite bague de commande de manière à emprisonner la douille contre la bague de commande à l'aide desdites saillies radiales.

D'autres avantages, buts et caractéristiques de la présente invention ressortiront de la description ci-dessous d'un mode de réalisation de l'invention présenté à titre d'exemple, ladite description s'appuyant sur les figures annexées, dans lesquelles :

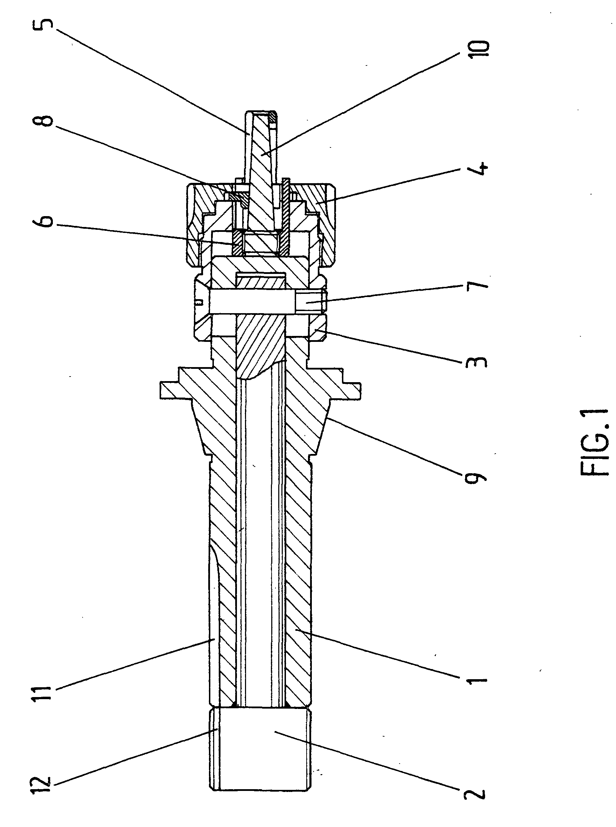

la figure 1 est une coupe longitudinale d'un mandrin expansible selon l'invention, et

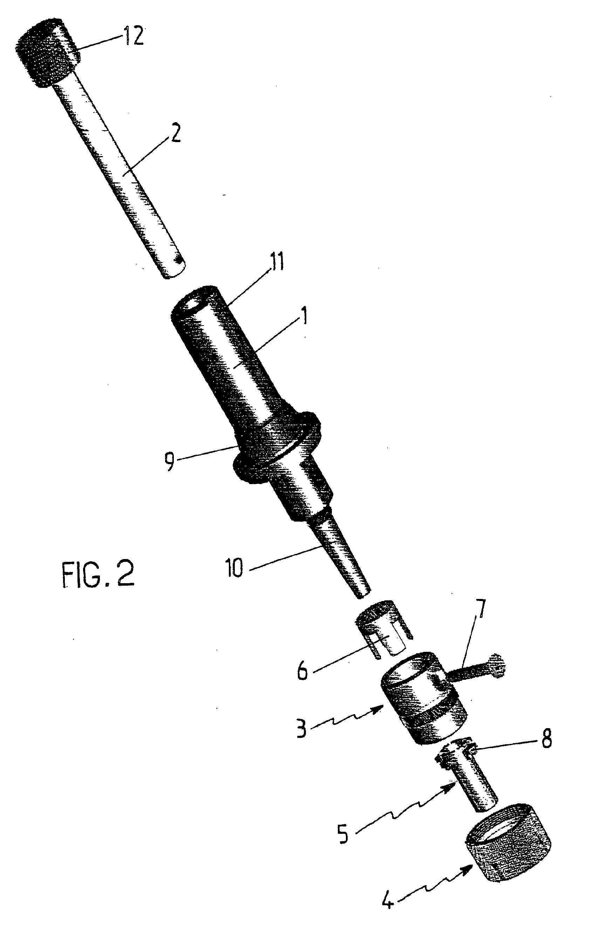

la figure 2 est une vue en perspective éclatée du mandrin illustré sur la figure 1.

On peut voir sur les figures un mandrin comprenant un corps de mandrin ("arbre") 1, dont la partie postérieure est destinée à être insérée dans l'alésage d'une broche machine (non représentée). Les figures montrent à titre d'exemple le mode de fixation connu sous le nom de "norme W25" : ledit alésage présente à son extrémité antérieure un évasement conçu pour recevoir la partie conique 9 de l'arbre 1, ainsi qu'une saillie conçue pour se loger dans une rainure 11 de l'arbre 1 de façon à déterminer l'orientation du mandrin lors de son insertion dans cet alésage.

Sur l'extrémité antérieure 10, qui a une forme conique, de l'arbre 1 peut coulisser axialement une bague 5 entaillée de plusieurs fentes longitudinales ("la douille") ; l'amplitude de coulissement de la douille 5 est limitée vers l'arrière par une butée 6 solidaire de l'arbre 1. La paroi intérieure de la douille 5 est elle aussi conique, de sorte que cette paroi reste en contact avec le cône 10, quelle que soit la position de la douille 5. La douille 5 peut ainsi changer de diamètre tout en conservant une surface externe parfaitement cylindrique, cette dernière venant s'appliquer sur les parois de l'alésage de la pièce à usiner (non représentée) au serrage, qui est donc parfaitement uniforme. Le serrage et le desserrage sont commandés par une tige (non représentée) coulissant le long de l'axe de la broche machine et reliée au tirant 2 du mandrin, qui coulisse le long de l'axe de l'arbre 1. Au montage du mandrin sur la broche machine, on fixe (par exemple, par vissage) ladite tige de commande sur la partie postérieure du tirant 2 du mandrin, cette partie postérieure du tirant 2 présentant d'ailleurs une rainure 12 située dans le prolongement de la rainure 11 de l'arbre 1 aux mêmes fins d'insertion.

Selon l'invention, la douille 5 est reliée au tirant 2 par l'entremise d'une bague de commande 3 qui a été rendue solidaire du tirant 2, par exemple au moyen d'une vis radiale 7. Enfin, la douille 5 comporte des saillies radiales 8 permettant de l'emprisonner sur la bague de commande 3 au moyen d'un écrou 4 que l'on peut visser sur cette bague 3.

L'invention atteint ainsi ses objectifs : l'utilisateur peut enlever une douille 5 en quelques secondes, simplement en dévissant l'écrou 4, et en faisant coulisser la douille 5 vers lui ; il peut alors aussi facilement mettre en place une douille 5 de diamètre différent. On notera que cette commodité d'utilisation a été obtenue par l'invention tout en offrant une précision de serrage optimale (de l'ordre du centième de millimètre), et une grande robustesse de tout le dispositif.

Les douilles 5 seront de préférence faites en acier trempé de façon à être inusables. Comme elles sont peu coûteuses, l'utilisateur pourra s'équiper à peu de frais d'une gamme de douilles assorties à son mandrin ; les diamètres de serrage pourront par exemple couvrir une plage de plusieurs mm à intervalles de 0,5 mm.

Le mode de réalisation de l'invention décrit ci-dessus a été présenté en tant qu'exemple illustrant les principes de la présente invention, mais il est bien clair que l'homme de l'art pourra s'en inspirer pour réaliser d'autres variantes sans pour autant sortir de l'invention. Par exemple, l'organe de fixation 9 du mandrin sur la broche machine peut être d'un type quelconque (norme W25, mais aussi bien W20, W32, cône SA, cône métrique, cône morse queue, ou autre). De même, d'autres moyens permettant l'assujettissement rapide de la douille 5 à la bague de commande 3 sont naturellement possibles, par exemple une bride à ressort et baïonnette.

## Revendications

1. Mandrin expansible, comprenant un arbre (1) présentant une extrémité antérieure conique (10), une douille expansible (5) constituée d'une bague munie de fentes longitudinales destinée à coulisser sur ladite extrémité antérieure conique (10), la paroi interne de ladite douille (5) ayant elle aussi la forme d'un cône dont l'angle au sommet est égal à celui de l'extrémité antérieure conique (10), et un tirant (2) destiné à être relié à une tige que l'on peut faire coulisser le long de l'axe de la broche machine pour commander le serrage ou le desserrage d'une pièce à usiner, la douille (5) étant reliée audit tirant (2) par l'entremise d'une bague de commande (3) solidaire du tirant (2), caractérisée en ce que le mandrin comprend un moyen de fixation rapide amovible (4) permettant d'assujettir la douille (5) à ladite bague de commande (3).

2. Mandrin expansible selon la revendication 1, caractérisé en ce que ladite douille (5) comporte des saillies radiales (8), et en ce que ledit moyen de fixation rapide amovible est constitué par un écrou (4) capable de se fixer sur ladite bague de commande (3) de manière à emprisonner la douille (5) contre la bague de commande (3) à l'aide desdites saillies radiales (8).
